# EUROPEAN PATENT APPLICATION

(11) **EP 2 061 252 A2**
(43) Date of publication of application: **20.05.2009**
(21) Application number: 08160918.2
(22) Date of filing: 22.07.2008
(51) Int. Cl.: H04N 7/26

(54) **Image decompression apparatus, medium recording image decompression program, decompression program, image decompression method**

(30) Priority: 31.10.2007 JP 2007283634
(71) Applicant: Fujitsu Ltd., Kawasaki-shi, Kanagawa 211-8588 (JP)
(72) Inventor: Sakai, Kenichiro, Kanagawa 211-8588 (JP); Chiba, Hirotaka, Kanagawa 211-8588 (JP)
(74) Representative: Wilding, Frances Ward

(57) **Abstract**

An object of the present invention is to provide an image decompression apparatus, a medium recording an image decompression program, and an image decompression method capable of sequentially decompressing compressed data of a plurality of images.

An image decompression apparatus includes: a request frame number acquisition section that sequentially acquires request frame numbers which are the numbers assigned to frames for which decompression is required in the forward or backward direction of the frame number; a compressed data acquisition section that acquires compressed data of a first compression unit to which the request frame number belongs and compressed data of a second compression unit adjacent to the first compression unit in the backward direction of the frame number; a decompression section that decompresses the compressed data of the first and second compression units acquired by the compressed data acquisition section to obtain decompressed images; and an image holding section that holds the decompressed images of the first and second compression units generated by the decompression section and extracts decompressed image corresponding to the request frame numbers so as to output the decompressed images.

## Description

### BACKGROUND OF THE INVENTION

### 1. Field of the Invention

The present invention relates to an image decompression apparatus, a medium recording an image decompression program, and an image decompression method that decompresses compressed data of a plurality of images.

### 2. Description of the Related Art

Performance of an imaging diagnostic apparatus such as a CT (Computed Tomography) or MR (Magnetic Resonance) has recently been improved. This allows, for example, imaging of the cross-section of a human body with a slice interval of as small as less than 1 mm. With such an imaging diagnostic apparatus, a multislice image constituted by a plurality of frames can be obtained as a scanned image per one inspection. The multislice image is obtained by sequentially scanning a cross-section image (frame) while changing the coordinate of the axis perpendicular to the cross-section image for each slice interval. When the slice interval is decreased, the number of frames of the multislice image that can be obtained per one inspection is increased up to several hundred to thousand, which corresponds to several hundred MB (Byte) in terms of data capacity.

The scanned multislice images are stored in an image server installed in a computer room of a medical institution and are transferred to a client terminal via a network at reading time or physical examination time for display or reference. Medical images that have been used in physical examination are legally required to be kept for a long period of time, so that the amount of image data to be stored is increasing yearly. Therefore, compression of the medical image is essential for increasing the storage amount of the data in an image server. Further, there is a strong demand that the scanned medical image is stored without degradation and, therefore, a lossless (reversible) compression method has often been used.

Examples of a conventional lossless image compression method applied to the medical image include lossless JPEG (Joint Photographic Experts Group), JPEG-LS (Lossless), JPEG 2000, and the like. Presently, Lossless JPEG is used most widely, and JPEG 2000 is used partly.

Lossless JPEG uses one to three pixels selected from among three neighboring pixels of a target pixel to calculate a prediction value of the target pixel and applies Huffman coding to a difference between the calculated prediction value and the true value of the target pixel. Seven prediction methods are defined and one predictor is selected for each image. The compression ratio, which depends on the type of image, is about 1/2 to 1/3 in the case of the medical image.

JPEG 2000 applies a discrete wavelet transform (DWT) to an image to transform it into frequency space and performs modeling for the transformed data so as to increase entropy coding efficiency, followed by arithmetic coding process. The compression ratio of JPEG 2000 for a medical image is about 1/3 to 1/4 which is higher than that of lossless JPEG.

JPEG-LS calculates a prediction value of a target pixel from four neighboring pixels of the target pixel and applies Golomb-Rice coding to the prediction error. A prediction method is selected from among three prediction methods for each pixel depending on the value of the target pixel. The compression ratio of JPEG-LS for a medical image is comparable with that of JPEG 2000.

The abovementioned lossless image compression method is an algorithm that performs compression on a per image basis. Nowadays, as a compression method for a medical image, such as a multislice CT/MR image, in which there is a correlation between frames, a method that uses a 3D DWT has been proposed. This method achieves a higher compression ratio than that of the abovementioned method that performs compression on a per image basis.

As a prior art related to the present invention, there is known an image data compression method that compresses a frame image constituting a plurality of slices of tomographic image or moving image (refer to, for example, Patent Document 1: Jpn. Pat. Appln. Laid-Open Publication No. 2005-245922).

The multislice CT/MR image, which is an image obtained by using a sensor provided outside a human body to detect the dosage of X-ray radiation transmitted through a human body or radiation dose from a radioactive substance administered into a human body and reconstructing, e.g., a distribution of X-ray absorption of the human body across a measured cross-section so as to visualize the condition of tissues inside the body, differs largely from a natural image that is obtained by directly photographing a subject.

In particular, the multislice CT/MR image may include noise caused by the sensor and reconstruction process, which does not exist in the natural image in general. Radiated noise caused in multislice CT image is a conspicuous example of the noise.

In the case where a conventional image compression method is used to compress the medical image including such noise that does not exist in a natural image, the compression efficiency becomes lower as compared with the case of the natural image, thus making it difficult to achieve a high image compression ratio.

The natural image has locally a high continuity between pixel values. The above-mentioned problem of difficulty in achieving a high image compression ratio is caused by the fact that the conventional image compression method is based on this feature of the natural image. When the DWT is applied to the natural image, the distribution of pixel values tends to be biased toward low frequency components of frequency space in the transformed data and, as this trend becomes stronger, the compression ratio becomes higher. On the other hand, the medical image including noise contains more high frequency components than the natural image does, so that the degree of the bias in the frequency space becomes small than that in the natural image, resulting in a decrease in a compression ratio.

Further, since the medical image needs to be compressed without image quality degradation, i.e., in a lossless fashion as described above, image processing involving the image quality degradation, such as one that quantizes frequency components to reduce information amount, cannot be applied to the medical image. This makes it difficult to achieve a higher compression ratio of the medical image.

As described above, in view of the sharp increase in the number of multislice images, i.e., the data amount thereof due to the technological advancement in an imaging diagnostic apparatus, there has been a need to compress the multislice image at a higher compression ratio in a lossless fashion. Further, there is a need to decompress the multislice image that has been compressed at a higher compression ratio in an easier-to-use manner.

### SUMMARY OF THE INVENTION

It is desirable to solve the above problems, and to provide an image decompression apparatus, a medium recording an image decompression program, and an image decompression method capable of sequentially decompressing compressed data of a plurality of images.

According a first aspect of an embodiment of the present invention, there is provided an image decompression apparatus that performs, based on compressed data obtained by compressing an image of a frame having a frame number, decompression of the image, comprising: a request frame number acquisition section that sequentially acquires request frame numbers which are the numbers assigned to frames for which decompression is required in the forward or backward direction of the frame number; a compressed data acquisition section that acquires compressed data of a first compression unit to which the request frame number belongs and compressed data of a second compression unit adjacent to the first compression unit in the backward direction of the frame number, the compressed data being constituted by a plurality of consecutive compression units each including a plurality of consecutive frames wherein the compressed data of the first frame in each compression unit is obtained by being subjected to compression based on only an image of the first frame and compression data of frames other than the first frame in each compression unit are obtained by being subjected to compression based on images of immediately preceding frames; a decompression section that decompresses the compressed data of the first and second compression units acquired by the compressed data acquisition section to obtain decompressed images; and an image holding section that holds the decompressed images of the first and second compression units generated by the decompression section and extracts decompressed image corresponding to the request frame numbers so as to output the decompressed images.

Further, according to a second aspect of an embodiment of the present invention, there is provided a medium for storing therein in a computer-readable manner an image decompression program allowing a computer to execute, based on compressed data obtained by compressing an image of a frame having a frame number, decompression of the image, the program allowing the computer to execute the steps of: sequentially acquiring request frame numbers which are the numbers assigned to frames for which decompression is required in the forward or backward direction of the frame number; acquiring compressed data of a first compression unit to which the request frame number belongs and compressed data of a second compression unit adjacent to the first compression unit in the backward direction of the frame number, the compressed data being constituted by a plurality of consecutive compression units each including a plurality of consecutive frames wherein the compressed data of the first frame in each compression unit is obtained by being subjected to compression based on only an image of the first frame and compression data of frames other than the first frame in each compression unit are obtained by being subjected to compression based on images of immediately preceding frames; decompressing the compressed data of the acquired first and second compression units to obtain decompressed images; and holding the decompressed images of the first and second compression units and extracting decompressed image corresponding to the request frame numbers so as to output the decompressed images.

Preferably, the program can perform decompression of the acquired compressed data in parallel with the acquisition of the compressed data.

Advantageously, in the case where the request frame number shifts to outside the first compression unit to update the first and second compression units, the program can delete decompressed images other than those of the first and second compression units.

Preferably, in the case where the request frame number exists within the second compression unit, the program can set the second compression unit as a new first compression unit and can also set a compression unit adjacent to the new first compression unit in the backward direction of the frame number as a new second compression unit.

Advantageously, in the case where the request frame number exists within a third compression unit which is adjacent to the first compression unit in the forward direction of the frame number, the program can set the first compression unit as a new second compression unit and can set the third compression unit as a new first compression unit.

Preferably, the program can acquire compressed data of the frame number subsequent to the frame number being decompressed.

Further, according to a third aspect of an embodiment of the present invention, there is provided an image decompression method that performs, based on compressed data obtained by compressing an image of a frame having a frame number, decompression of the image, comprising the steps of: sequentially acquiring request frame numbers which are the numbers assigned to frames for which decompression is required in the forward or backward direction of the frame number; acquiring compressed data of a first compression unit to which the request frame number belongs and compressed data of a second compression unit adjacent to the first compression unit in the backward direction of the frame number, the compressed data being constituted by a plurality of consecutive compression units each including a plurality of consecutive frames wherein the compressed data of the first frame in each compression unit is obtained by being subjected to compression based on only an image of the first frame and compression data of frames other than the first frame in each compression unit are obtained by being subjected to compression based on images of immediately preceding frames; decompressing the compressed data of the acquired first and second compression units to obtain decompressed images; and holding the decompressed images of the first and second compression units and extracting decompressed image corresponding to the request frame numbers so as to output them.

According to embodiments of the present invention, compressed data of a plurality of images can sequentially be decompressed.

### BRIEF DESCRIPTION OF THE DRAWINGS

Preferred features of the present invention will now be described, purely by way of example, with reference to the accompanying drawings, in which :-
FIG. 1 is a block diagram showing an example of a configuration of an image compression apparatus according to the precondition technique embodying the present invention;
FIG. 2 is a block diagram showing an example of operation of compression processing performed in the image compression apparatus according to the precondition technique;
FIG. 3 is a flowchart showing an example of operation of the compression processing performed in the image compression apparatus according to the precondition technique;
FIG. 4 is a view showing an example of the raster scan order according to the precondition technique;
FIG. 5 is a view showing an example of selection of reference pixels in intraframe coding processing according to the precondition technique;
FIG. 6 is a formula for calculating a prediction value in the intraframe coding processing according to the precondition technique;
FIG. 7 is a formula for calculating a prediction error in the intraframe coding processing according to the precondition technique;
FIG. 8 is a formula for calculating an error evaluation value in the intraframe coding processing according to the precondition technique;
FIG. 9 is a view showing an example of selection of reference pixels in interframe coding processing according to the precondition technique;
FIG. 10 is a formula for calculating the prediction value in the interframe coding processing according to the precondition technique;
FIG. 11 is a formula for calculating the prediction error in the interframe coding processing according to the precondition technique;
FIG. 12 is a formula for calculating the error evaluation value in the interframe coding processing according to the precondition technique;
FIG. 13 is a view showing an example of a configuration of compressed data according to the precondition technique;
FIG. 14 is a flowchart showing an example of operation of compression condition determination processing performed by the image compression apparatus according to the precondition technique;
FIG. 15 is a flowchart showing an example of operation of decompression processing performed by the image compression apparatus according to the precondition technique;
FIG. 16 is a block diagram showing an example of a data structure of the compressed data according to the present embodiment;
FIG. 17 is a block diagram showing an example of a configuration of the image viewing system according to the present embodiment;
FIG. 18 is a flowchart showing an example of operation of decompression processing performed in the image decompression apparatus according to the present embodiment;
FIG. 19 is a conceptual view showing a first state in the decompression processing according to the present embodiment.
FIG. 20 is a conceptual view showing a second state in the decompression processing according to the present embodiment;
FIG. 21 is a conceptual view showing a third state in the decompression processing according to the present embodiment;
FIG. 22 is a conceptual view showing a fourth state in the decompression processing according to the present embodiment;
FIG. 23 is a conceptual view showing a fifth state in the decompression processing according to the present embodiment;
FIG. 24 is a conceptual view showing a sixth state in the decompression processing according to the present embodiment; and
FIG. 25 is a conceptual view showing a seventh state in the decompression processing according to the present embodiment.

### DETAILED DESCRIPTION OF THE PREFERRED EMBODIMENTS

A precondition technique of the present invention will be described below with reference to the accompanying drawings.

### (Precondition Technique)

An image compression apparatus according to the precondition technique of the present invention is featured in that a multislice image constituted by a plurality of frames is divided into groups each having a predetermined number of frames, each frame is divided into blocks, pixels included in [block vertical size x block horizontal size x frame number in each group] are set as a compression unit, and prediction of the value of a target pixel is made such that the entropy of the total prediction error of each pixel in the compression unit becomes minimum.

Further, in the image compression apparatus, the same prediction is applied to the same block positions in a plurality of frames. This allows the regularity of a local change of noise included in a multislice image and continuity or similarity of pixel values between frames to be reflected in the prediction of the pixel value. Thus, the prediction accuracy can be improved to allow the prediction error values to be concentrated near 0, resulting in an improvement of the entropy coding efficiency.

In a CT imaging apparatus, an X-ray source disposed opposite to a human body and a detector for detecting X-radiation are rotated in a spiral manner, and a difference in an X-ray absorption between various sites of the human body is visualized as brightness value based on the X-ray transmission detected by the detector. Since the CT imaging apparatus performs scanning while being rotated, a circular imaging area is obtained. The exterior of the circular imaging area is out of imaging area, so that it has a uniform value (e.g., 0).

In a multislice image, the above exterior area exists across all frames at the same position. The image compression apparatus detects the area in which the same pixel value continues across a plurality of frames to thereby exclude the detected area from a compression area while outputting area information to thereby reduce the number of pixels to be compressed and increase the compression efficiency.

Further, the image compression apparatus selects reference pixels to be used for the prediction of a target pixel value from among pixels that are located near the target pixel and therefore has a high correlation with the target pixel to thereby improve the prediction accuracy. Since the positions of the reference pixels need to be capable of being referred to at decompression time, the reference pixels must be selected from among the pixels that have already been compressed (or decompressed, in the case of decompression processing). In the case where the image compression apparatus performs compression according to the raster scan order, the reference pixels are selected from among the pixels that precede the target pixel in terms of the raster scan order.

Further, the image compression apparatus sets a weight for the pixel values of the reference pixels and summates the values each obtained by multiplying the pixel value of each reference pixel and its weight to thereby calculate the prediction value of the target pixel. Further, the image compression apparatus uses a set of weights for each compression unit described above and determines the weight such that the prediction error which is a difference between each target pixel value in the compression unit and the prediction value thereof becomes minimum. This allows local continuity or similarity of images and continuity or similarity of pixel values between frames to be reflected on the prediction, thereby increasing the compression ratio.

Since there is similarity of images or continuity of pixel values between an image of a current frame including the target pixel and a preceding frame, the pixel in the preceding frame nearer to the same position as the target pixel is expected to have a higher correlation with the target pixel. Therefore, by using the pixels in the preceding frame for the prediction in addition to the reference pixels, the prediction accuracy can be expected to be further increased. Since the preceding frame has been compressed/decompressed before the frame including the target pixel, the positions of the reference pixels are arbitrarily selected. However, it is preferable to select the reference pixels in the preceding frame from among the pixels near the same position as the target pixel in the descending order in terms of a correlation with the target pixel.

It is necessary to store the weight values of the reference pixels in addition to the coded data obtained by entropy coding the prediction error, and the image compression apparatus assigns a predetermined number of bits for representing the weight values. Accordingly, by determining the number of reference pixels such that the total of the number of bits obtained by multiplying the number of bits assigned to the weight with the number of weights (= number of reference pixels) and the size of the compressed data obtained by entropy coding the prediction error becomes minimum, the compression efficiency becomes highest.

Further, a pixel nearer to the target pixel has a higher correlation with the target pixel and is therefore suitably used for the prediction. Therefore, the image compression apparatus preferentially selects the pixels near the target pixel to thereby improve the prediction accuracy.

A configuration of the image compression apparatus according to the precondition technique will next be described.

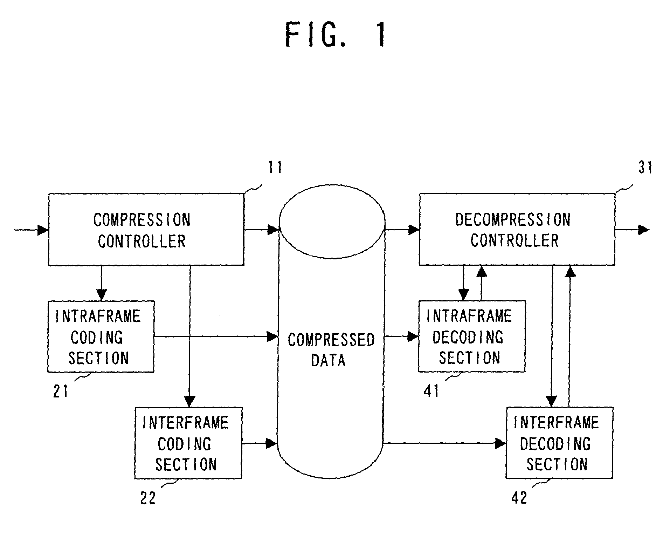

FIG. 1 is a block diagram showing an example of a configuration of the image compression apparatus according to the precondition technique. The image compression apparatus includes: a compression controller 11, an intraframe coding section 21, and an interframe coding section 22, which are components for compression processing that generates compressed data from a multislice image (3D image); and a decompression controller 31, an intraframe decoding section 41, and an interframe decoding section 42, which are components for decompressing processing that generates an original multislice image from a compressed data.

Operation of the compression processing performed in the image compression apparatus according to the precondition technique will next be described.

The compression controller 11 previously performs compression condition determination processing to thereby determine compression conditions for minimizing the size of data to be compressed and then performs compression processing using the determined compression conditions. The details of the compression condition determination processing will be described later.

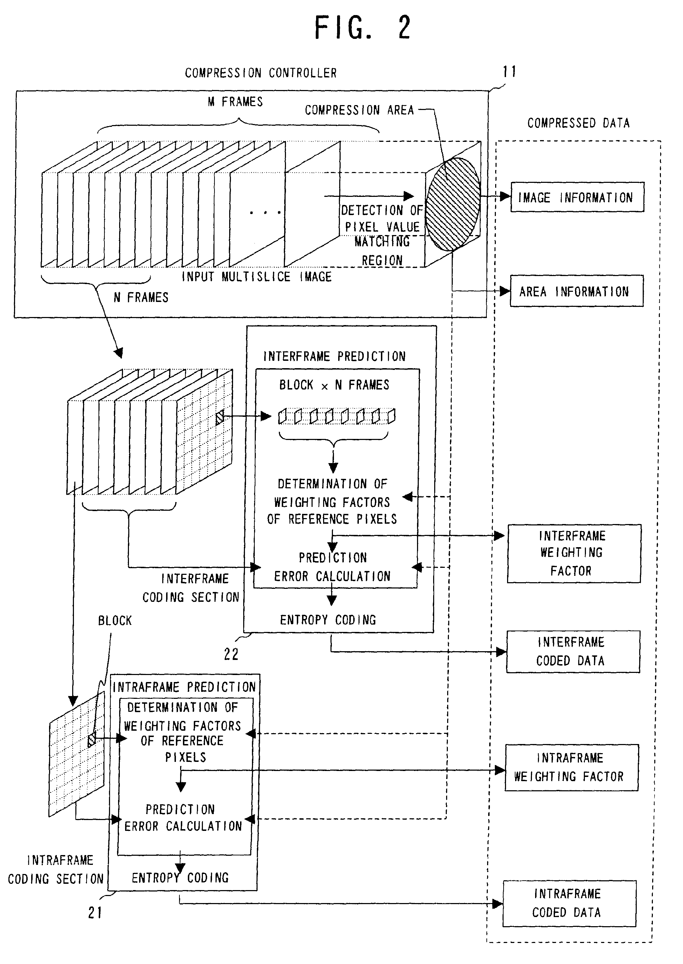

FIG. 2 is a block diagram showing an example of operation of the compression processing performed in the image compression apparatus according to the precondition technique. The compression controller 11 acquires image information and area information from an input multislice image and outputs them to compressed data. Further, the compression controller 11 divides frames of the multislice image into a plurality of groups, outputs a first frame of the group to the intraframe coding section 21, and outputs the group to the interframe coding section 22. The intraframe coding section 21 performs, as intraframe coding processing, intraframe prediction and entropy coding for each block in the first frame and outputs its results to the compressed data as an intraframe weighting factor and intraframe coded data. The interframe coding section 22 performs, as interframe coding processing, interframe prediction and entropy coding for each block in the frames of the group and outputs its results to the compressed data as an interframe weighting factor and interframe coded data.

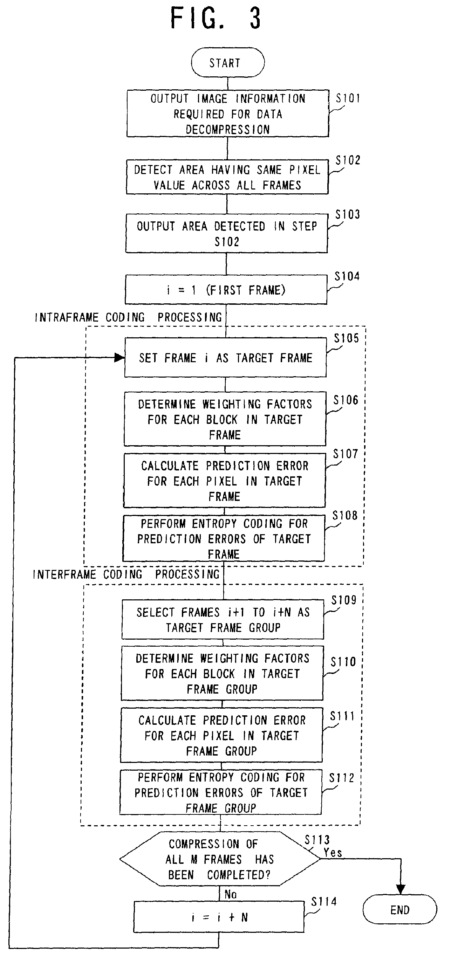

FIG. 3 is a flowchart showing an example of operation of the compression processing performed in the image compression apparatus according to the present embodiment. The compression controller 11 outputs, as image information concerning an input multislice image, the horizontal and vertical size (number of pixels) of each frame, total frame number M, frame number N in each group, block size (block vertical pixel number x block horizontal pixel number) K x K in each frame to the compressed data (S101). The above image information is required for data decompression. Although the block vertical pixel number and block horizontal pixel number are set equal to each other, they may differ from each other.

The compression controller 11 then detects the area having the same pixel value across all M frames of the input multislice image. In the case of, e.g., a CT image, the exterior portion of a circular area which is scanned area is detected in general. The compression controller 11 then sets the pixels in the detected area as a non-compression area for which coding processing is not performed, and sets the remaining area as a compression area for which coding processing is performed (S102). The non-compression area may be determined in units of a group. In this case, the non-compression area is defined as the area having the same pixel value across all N frames.

Subsequently, the compression controller 11 outputs the area information detected in step S102 to the compressed data (S103). At this time, the compression controller 11 compresses the area information as much as possible. For example, assuming that the compression area has a circular shape, the compression controller 11 outputs the circle center position and radial pixel number to the compressed data; assuming that the compression area has a rectangular shape, the compression controller 11 outputs the position of the upper left corner of the rectangle, vertical pixel number, and horizontal pixel number to the compressed data. Further, for the compression area having an arbitrary shape, the compression controller 11 sets the inner area of the interior of the compression area as "0" and sets the exterior thereof as "1" and performs coding of the run length of 0's and 1's.

The compression controller 11 then sets the compression starting position to the first frame (frame number i = 1) (S104).

The following steps S105 to S108 describe intraframe coding processing performed by the intraframe coding section 21.

The compression controller 11 acquires N frames (first frame = i) from M frames and sets the N frames as a target group. The intraframe coding section 21 selects a frame i as a target frame (S105).

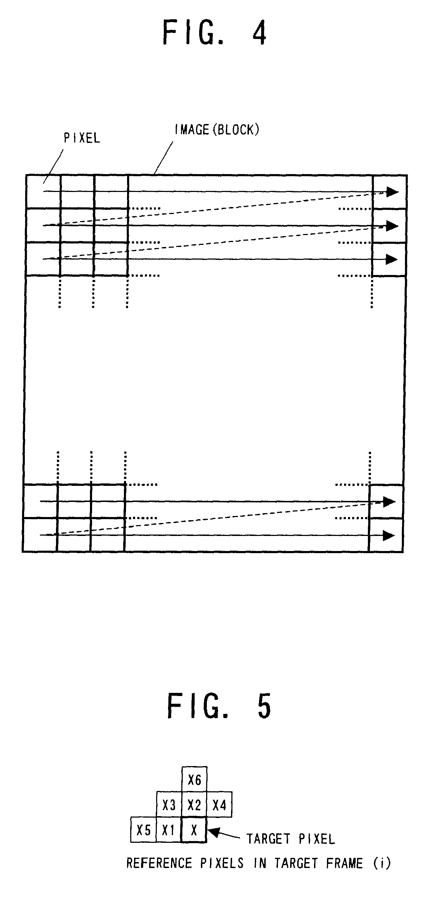

Then, the intraframe coding section 21 determines weighting factors of reference pixels for each block in the target frame such that a difference between the pixel value of target pixel and prediction error thereof becomes minimum (S106). More specifically, the intraframe coding section 21 selects a block within the compression area as a target block, sequentially selects target pixels in the target block according to the raster scan order, and determines the weighting factors of the reference pixels for each target block. FIG. 4 is a view showing an example of the raster scan order according to the precondition technique. As shown in FIG. 4, the intraframe coding section 21 sequentially selects the pixels in the block as a target pixel one by one starting from the uppermost line to the lowermost line.

FIG. 5 is a view showing an example of selection of reference pixels in the intraframe coding processing according to the precondition technique. Assuming that each pixel has a scan number according to the scan order, a predetermined number of pixels near the target pixel are selected as reference pixels from among the pixels having smaller number than that of the target pixel within the compression area. It is assumed that pixel value of the target pixel is X, number of reference pixels is R, and pixel values of the R reference pixels selected for the target pixel are X1 to XR. In FIG. 5, the number of reference pixels R is set to 6.

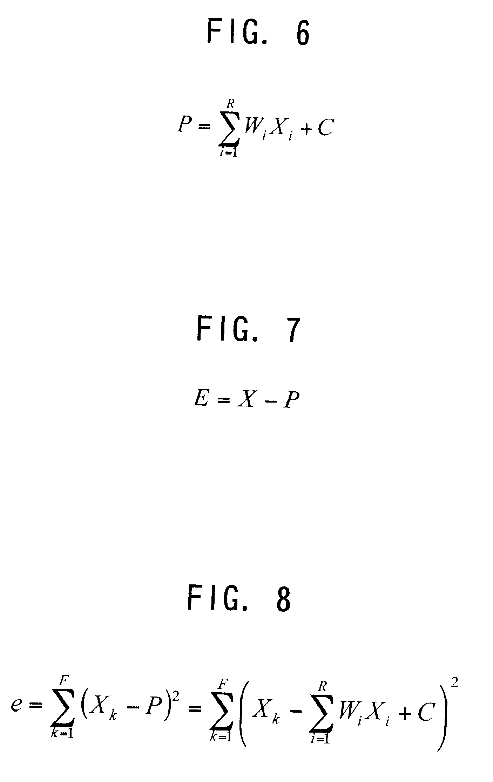

As an example of a weighting factor determination method, there is known a method that uses a multiple regression analysis or least-square method. Assuming that prediction value of the target pixel is P, weighting factors of the reference pixels are W1 to WR, prediction error is E, evaluation value of the prediction error is e, number of the pixels in each block is F (F = K x K), values of F pixels in each block are X1 to XF, and constant term of the prediction value is C, a relationship between the parameters can be represented by the formulas shown in FIGS. 6 to 8. FIG. 6 is a formula for calculating the prediction value in the intraframe coding processing according to the precondition technique. FIG. 7 is a formula for calculating the prediction error in the intraframe coding processing according to the precondition technique. FIG. 8 is a formula for calculating the error evaluation value in the intraframe coding processing according to the precondition technique.

The intraframe coding section 21 uses F pixels in each block of the target frame and formula shown in FIG. 8 to calculate prediction error evaluation value e and then calculates weighting factors W1 to WR and constant term C such that e becomes minimum. The constant term C may be set to 0 for reduction in the number of parameters. Then, the intraframe coding section 21 outputs the determined weighting factors W1 to WR to the compressed data as intraframe weighting factors. The bit accuracy for representing the weighting factor is previously determined such that a calculation error made at the calculation time of the prediction value falls within a predetermined range.

Then, the intraframe coding section 21 sequentially selects pixels in the target frame as a target pixel, calculates the prediction value based on the weighting factors obtained in step S106 and values of the reference pixels according to the formula shown in FIG. 6, and calculates the prediction error between the prediction value and the original pixel value of the target pixel according to the formula shown in FIG. 7 (S107). The intraframe coding section 21 then obtains a block including the target pixel as a target block based on the position of the target pixel for which the prediction value is calculated and selects the weighting factors (that have been determined in step S106) corresponding to the target block.

The intraframe coding section 21 performs entropy coding for the prediction errors of the target frame calculated in step S107 (S108). The distribution of the prediction errors concentrates near 0, so that Golomb-Rice coding is suitably used as the entropy coding. Other coding methods such as Huffman coding or arithmetic coding may be applied. Then, the intraframe coding section 21 outputs a result of the entropy coding to the compressed data as intraframe coded data.

The following steps S109 to S112 describe interframe coding processing performed by the interframe coding section 22.

The interframe coding section 22 selects all frames in the target group except for frame i (i.e., frames i+1 to i+N) as a target frame group (S109). If the number of frames that have not yet been coded does not reach N, the interframe coding section 22 selects remaining all frames as a target frame group.

The interframe coding section 22 then determines the weighting factors of the reference pixels for each block in the target frame group (S110). The determination method of the weighting factors is the same as that in the case of the intraframe coding processing except for the following points: target pixel is selected in the target block at the same positions in respective frames of the target frame group; assuming that the frame including the target pixel is a target frame and that the frame number of the target frame is j, reference pixels are selected from a predetermined range in the target frame (j) and immediately preceding frame (j-1); and pixels used for the calculation of the prediction error evaluation value e exist across N frames (= target group). The target pixels are sequentially selected in the same target block in respective frames of the target frame group according to the raster scan order.

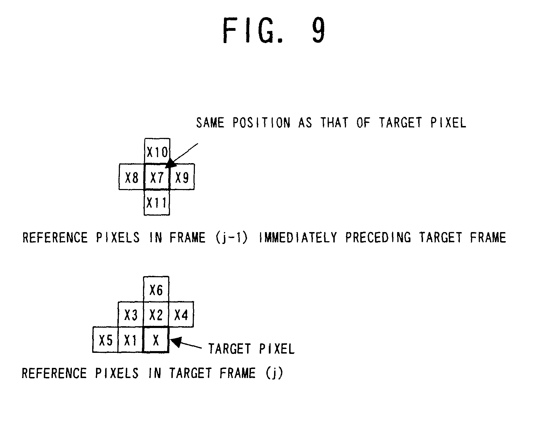

FIG. 9 is a view showing an example of selection of reference pixels in the interframe coding processing according to the precondition technique. A predetermined number of pixels near the target pixel are selected as reference pixels from among the pixels having smaller number than the target pixel and further a pixel located in the same position as the target pixel in the immediately preceding frame and its neighboring pixels are selected. As in the case of the intraframe coding processing, it is assumed that pixel value of the target pixel is X, number of reference pixels is S, and pixel values of the S reference pixels selected for the target pixel are X1 to XS. In FIG. 9, the number of reference pixels S is set to 11. Further, FIG. 9 represents the positions of the reference pixels in the current frame (j) including the target pixel and immediately preceding frame (j-1).

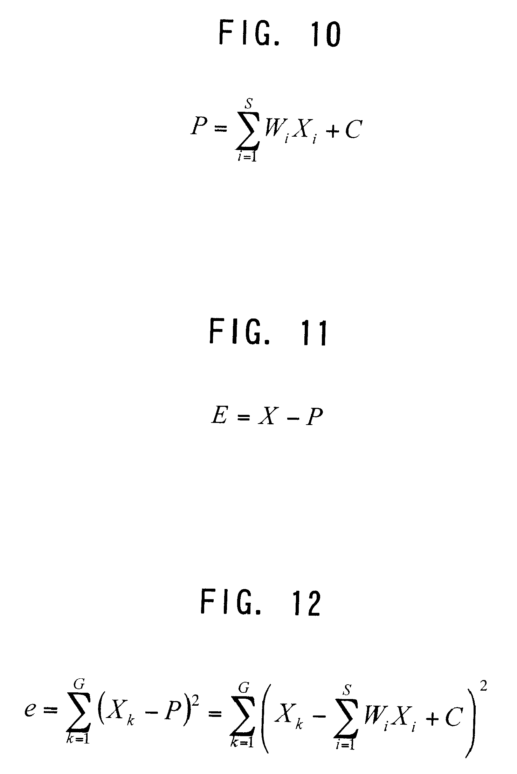

Assuming that prediction value of the target pixel is P, weighting factors of the reference pixels are W1 to WS, prediction error is E, evaluation value of the prediction error is e, number of the pixels in each compression unit is G (G = K × K × N), values of G pixels in each compression unit are X1 to XG, and constant term of the prediction value is C, a relationship between the parameters can be represented by the formulas shown in FIGS. 10 to 12. FIG. 10 is a formula for calculating the prediction value in the interframe coding processing according to the precondition technique. FIG. 11 is a formula for calculating the prediction error in the interframe coding processing according to the precondition technique. FIG. 12 is a formula for calculating the error evaluation value in the interframe coding processing according to the precondition technique.

The interframe coding section 22 uses G pixels in each compression unit of the target frame and formula shown in FIG. 12 to calculate prediction error evaluation value e and then calculates weighting factors W1 to WS and constant term C such that e becomes minimum. The constant term C may be set to 0 for reduction in the number of parameters. Then, the interframe coding section 22 outputs the determined weighting factors W1 to WS to the compressed data as interframe weighting factors.

Then, the interframe coding section 22 calculates the prediction value from the weighting factors obtained in step S110 and values of the reference pixels according to the formula shown in FIG. 10 for each pixel in the target frame group and then calculates the prediction error between the prediction value and original pixel value of the target pixel according to the formula shown in FIG. 11 (S111). The target pixels are sequentially selected according to the raster scan order as in the case of the intraframe coding processing. The interframe coding section 22 then obtains a block including the target pixel as a target block based on the position of the target pixel for which the prediction value is calculated and selects the weighting factors (that have been determined in step S110) corresponding to the target block.

The interframe coding section 22 performs entropy coding for the prediction errors of the target frame group calculated in step S111 (S112). Although Golomb-Rice coding is suitably used as the entropy coding as in the case of the intraframe coding processing, other coding methods such as Huffman coding or arithmetic coding may be applied. Then, the interframe coding section 22 outputs a result of the entropy coding to the compressed data as interframe coded data.

The abovementioned intraframe coding processing and interframe coding processing are performed for each target group. Further, each step of the intraframe coding processing and interframe coding processing are performed in units of a compression unit which is a 3D area obtained by dividing the target group into blocks, so that correlation between pixels in the compression unit is high, thereby achieving a high compression efficiency.

If the coding of all M frames has been completed (Y in S113), the compression controller 11 ends the compression processing; if there remains any frame that has not been coded (N in S113), the compression controller 11 proceeds to step S114.

The compression controller 11 then adds N to the variable i representing frame number for next selection of the first frame to be coded (S114) and returns to step S105.

By repeating the processing of steps S105 to S114 according to the abovementioned flow until the compression processing of all frames has been completed, the input multislice medical images constituted by M frames is compressed.

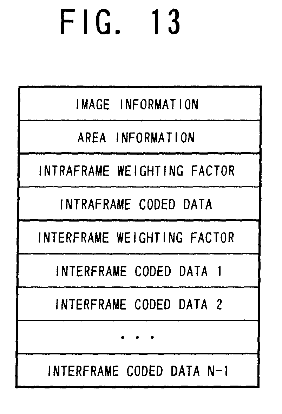

FIG. 13 is a view showing an example of a configuration of the compressed data according to the precondition technique. This figure shows compressed data output as a result of the compression processing. The compressed data includes, in addition to the abovementioned image information and area information, intraframe weighting factor and intraframe coded data obtained by the intraframe coding processing, and interframe weighting factor and interframe coded data obtained by the interframe coding processing. The intraframe weighting factor, intraframe coded data, interframe weighting factor, and interframe coded data are stored in groups.

Although the intraframe coding processing in the precondition technique is performed in the same manner as the interframe coding processing, another lossless compression processing for 2D image may be applied as the intraframe coding processing.

Further, although the compression processing is performed according to the frame number and the reference pixels are selected from the current frame and immediately preceding frame in the interframe coding processing, the compression processing may be performed not according to the frame number but, e.g., in the forward and backward directions of the frame number. In this case, the reference pixels may be selected according to the directions. Further, reference pixels may be selected not only from the immediately adjacent frame, but also from the frame two or more before or after the current frame depending on the strength of the correlation between frames.

Next, compression condition determination processing will be described.

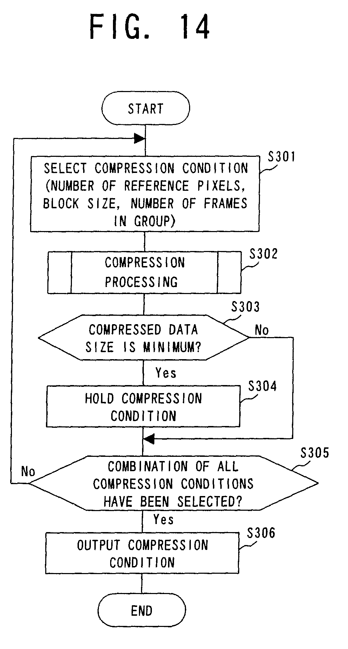

FIG. 14 is a flowchart showing an example of operation of compression condition determination processing performed by the image compression apparatus according to the precondition technique. The compression controller 11 selects a first compression condition from compression conditions (S301). The compression condition is a combination of the following three parameters.

Parameter 1: number and position of reference pixels (used in steps S106 and S110)

Parameter 2: block size in frame (used in steps S106 and S110)

Parameter 3: number of frames in group (used in step S101)

For example, the compression controller 11 selects a combination of parameters 1 and 2 as the compression condition used in the intraframe coding processing and selects a combination of parameters 1, 2, and 3 as the compression condition used in the interframe coding processing. The compression controller 11 changes the value of each parameter within a predetermined range to thereby obtain an optimum value.

For parameter 1, the compression controller 11 sequentially selects the reference pixels according to a predetermined order starting from the frame nearest to the target pixel to thereby obtain the optimum value of the number of reference pixels. For parameter 2, the compression controller 11 gradually increases the block size from a smaller number to thereby obtain the optimum value of the block size. For parameter 3, the compression controller 11 gradually increases the number of frames in a group from a smaller number to thereby obtain the optimum value of the number of frames in a group.

The compression controller 11 performs compression processing for an image to be evaluated using the compression condition selected in step S301 (S302). The compression controller 11 then determines whether the size of the compressed data is the minimum of the size of the compressed data that have been obtained by the compression processing using the previous conditions. If the data size is the minimum, (Y in S303), the compression controller 11 proceeds to step S304; otherwise (N in S303), the compression controller 11 proceeds to step S305.

Then, the compression controller 11 holds the compression condition used in the compression processing of step S302 (S304). That is, the compression condition with which the compressed data size becomes minimum among all previous compression conditions is held.

Then, the compression controller 11 determines whether all compression conditions have been used to perform compression processing. If all conditions have been used for the compression processing (Y in S305), the compression controller 11 proceeds to step S306; otherwise (N in S305), the compression controller 11 returns to step S301. In step S301, the compression controller 11 selects another combination of conditions and uses it to perform step S302 and subsequent steps.

The compression controller 11 outputs the compression condition selected in steps S301 to S305, with which the compressed data size becomes minimum, as an optimum compression condition (S306). Afterward, this optimum compression condition is used for the compression processing.

The compression condition obtained by the abovementioned compression condition determination processing is the optimum condition for an image to be evaluated. Accordingly, this condition can be expected to be nearly optimum compression condition for an image of the same type. In the case where compression processing needs to be performed using the optimum compression condition for each input multislice image, the compression condition determination processing should be performed for an input multislice image. In this case, compression data is held in step S304, and not compression condition but the compressed data is output in step S306. With this configuration, it is possible to output compression data that has been compressed by using the optimum compression condition for each input image.

Next, operation of decompression processing performed in the image compression apparatus according to the precondition technique will be described.

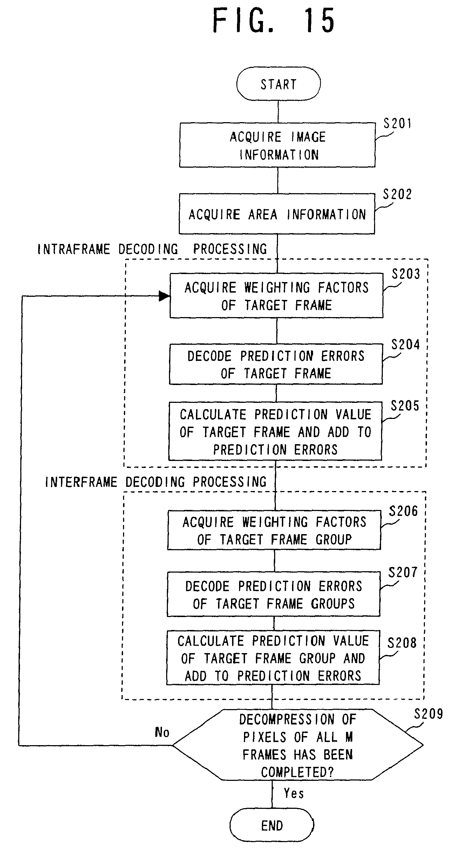

FIG. 15 is a flowchart showing an example of operation of decompression processing performed by the image compression apparatus according to the precondition technique. The decompression controller 31 acquires, from the image information of the compressed data, the horizontal and vertical pixel number of an input image, total frame number M, divided frame number N, block size K x K pixels (S201). The decompression controller 31 then acquires a compression area from the area information of the compressed data. If the area information has been coded, the decompression controller 31 decodes it (S202).

The following steps S203 to S205 describes intraframe decoding processing performed by the intraframe decoding section 41.

The intraframe decoding section 41 determines a target frame as in the case of the compression processing and acquires, from the compressed data, the intraframe weighting factors W1 to WR for each block (S203). A set of weighting factors W1 to WR is stored for each block. In this example, the number of reference pixels R is set to 6, as in the case of the example of the compression processing.

The intraframe decoding section 41 decodes the prediction errors of the target frame that have been entropy coded (S204).

The intraframe decoding section 41 scans the prediction errors that have been decoded in step S204 in the abovementioned raster scan order, uses the weighting factors acquired in step S203 to calculate the prediction value P according to the formula shown in FIG. 6, and adds the prediction value P to the prediction errors to restore an original pixel value (S205).

The following steps S206 to S208 describe interframe decoding processing performed by the interframe decoding section 42.

The interframe decoding section 42 determines a target frame group as in the case of the compression processing, and acquires the interframe weighting factors W1 to WS from the compressed data. A set of weighting factors W1 to WS is stored for each block. In this example, the number of reference pixels S is set to 11, as in the case of the example of the compression processing (S206).

Then, the interframe decoding section 42 decodes the interframe coded data to acquire the entropy coded prediction errors. In this case, prediction errors corresponding to N-1 frames which is the target frame group are decoded (S207).

The interframe decoding section 42 then scans the prediction errors of each target frame group that have been decoded in step S207 in the abovementioned raster scan order, uses the weighting factors acquired in step S203 to calculate the prediction value P according to the formula shown in FIG. 10, and adds the prediction value P to the prediction errors to restore an original pixel value (S208).

If the decompression processing of all M frames has been completed (Y in S209), the decompression controller 31 ends this flow; if there remains any frame that has not been decompressed (N in S209), the decompression controller 31 returns to step S203. By repeating the processing of steps S203 to S209 until the decoding processing of all M frames has been completed, the original multislice medical images constituted by M frames is restored.

Although the image compression apparatus according to the precondition technique has been applied to compress the multislice CT/MR image which is a 3D image in which 2D images (xy planes) are arranged in the depth direction (Z-axis direction), it may be applied to compress a 3D image in which 2D images (xy coordinate) are arranged in the time direction (t coordinate). That is, when the image compression apparatus according to the present embodiment is used to compress a 3D image including a frame group constituted by 2D image frames in which there is a predetermined correlation between a given frame and its neighboring frame, the advantage of the present invention can be obtained.

The image compression apparatus may be constituted by the compression controller 11, intraframe coding section 21, and interframe coding section 22. In this case, an image decompression apparatus constituted by the decompression controller 31, intraframe decoding section 41, and interframe decoding section 42 may be provided.

As described above, according to the compression and decompression processing according to the precondition technique, it is possible to achieve a higher 3D image compression ratio than that achieved by a lossless compression method using a conventional 3D DWT. That is, it is possible to reduce the storage capacity for storing image data as compared to the conventional lossless compression method, contributing to an increase in the number of images to be stored and reduction in cost of a storage apparatus for storing images.

The image compression apparatus according to the precondition technique can easily be applied to an image processing apparatus to improve the performance thereof. Examples of the image processing apparatus include an information processing apparatus such as a PC (Personal Computer) or server that executes an image processing software application, an imaging diagnostic apparatus such as a CT or MR, an image pickup apparatus such as a digital still camera or video camera, and the like.

The image compression method described above can independently decompress compressed data in units of a compression unit. However, since prediction of frames other than the first frame in the compression unit is carried out using the pixel value of the immediately preceding frame, the frames always need to be decompressed starting from the first frame.

Decompression and display processing of compressed data that has been subjected to the interframe coding processing in a compression unit, as described in the abovementioned image compression method, will be described. It is assumed here that the frames are sequentially displayed in the forward or backward direction of the frame number according to user's operation in order for the user to easily view a large number of frames.

In the case where the frames are sequentially displayed in the forward direction of the frame number, it is possible to use a decompressed frame for decompression of a frame subsequent to a frame currently being displayed, so that the decompression processing can be performed with a small delay. When a compression unit subsequent to a compression unit currently being displayed is displayed, the first frame of the subsequent compression unit is subjected to decompression processing. In this case, the first frame has been subjected to the intraframe coding and therefore can be decompressed independently, not depending on another frame. Thus, also in this case, the decompression processing can be performed with a short delay.

On the other hand, in the case where the frames are sequentially displayed in the backward direction of the frame number, after the completion of the decompression of the first frame of a compression unit currently being displayed, decompression of the last frame of a preceding compression unit needs to be performed. Accordingly, since the frames need to be decompressed sequentially from the first frame in the compression unit, in order to decompress the last frame of a preceding compression unit, all frames from the first to last of a preceding compression unit need to be decompressed.

That is, the display interval between frames is substantially constant and small in the case where the frames are sequentially displayed in the forward direction of the frame number, while in the case where the frames are sequentially displayed in the forward direction of the frame number, a large delay occurs at the time point when the compression unit switches from one to the next, so that the display interval of the frames varies, deteriorating user's viewability and operability.

An embodiment of the present invention will be described below with reference to the accompanying drawings.

### (Embodiment)

In the present embodiment, an image viewing system for viewing, in a sequential manner, frames of data compressed according to the above image compression method will be described.

First, a data structure of the compressed data according to the present embodiment will be described.

Compressed data of one frame is stored in one compressed data file. Frame numbers, which are serial numbers of all frames in all compression units, are assigned to respective frames, and unique file names are assigned to respective compressed data files. Further, there exists a management file for managing the compressed data file. The management file stores the frame number and compressed data file name corresponding to the frame number.

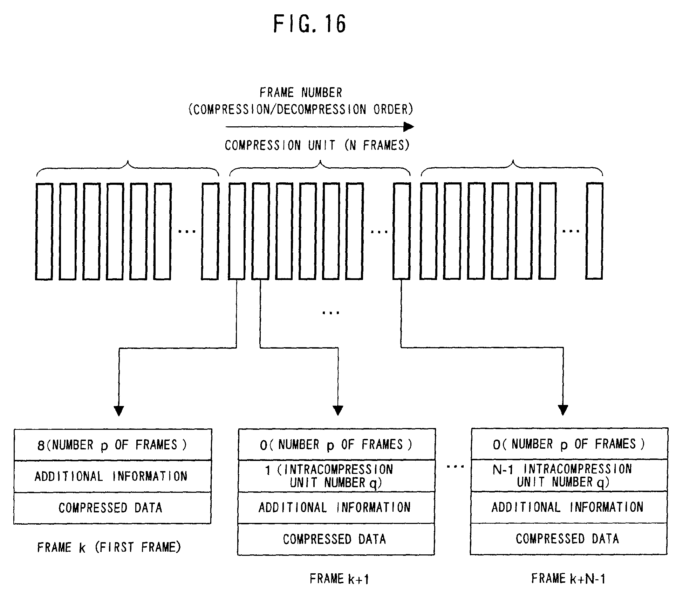

FIG. 16 is a block diagram showing an example of a data structure of the compressed data according to the present embodiment. It is assumed in this example that the size of the compression unit is set to N frames. That is, compressed data files of N consecutive frames belong to one compression unit. Further, it is assumed that the frame numbers assigned to the frames belonging to the compression unit is k to k+N-1.

In addition to the compressed data in which an image in the frame has been coded, the compressed data file retains information concerning the frame as a header. The header of the compressed data file of the first frame (frame k) in one compression unit includes the number p of frames and additional information. The additional information means other information. Headers of the compressed data files of frames (frames k+1 to k+N-1) other than the first frame in one compression unit each include the number p of frames, intracompression unit number q, and additional information.

By referring to the header, the first frame number or last frame number in one compression unit including arbitrarily frames can be acquired. The image viewing system according to the present embodiment performs control by referring to the header.

In the case where the number of frames indicated by the header of the compressed data file of a given frame is not 0, the frame is the first frame. The compressed data of the first frame is intraframe coded data. On the other hand, in the case where the number of frames indicated by the header of the compressed data file of a given frame is 0, the frame is any one of the frames other than the first frame, and the intra compression unit number starting from the first frame is added thereto. The compressed data of the frames other than the first frame are interframe coded data.

A configuration of the image viewing system according to the present embodiment will next be described.

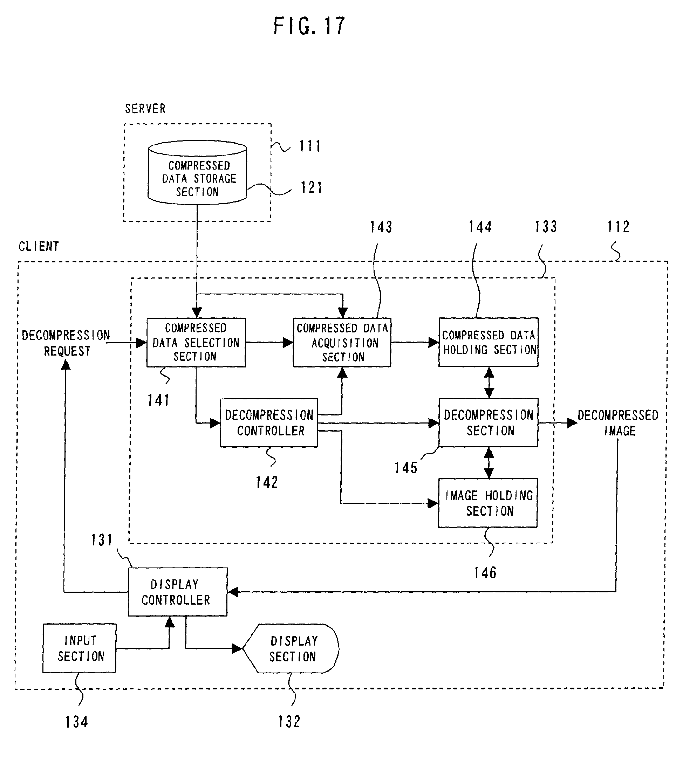

FIG. 17 is a block diagram showing an example of a configuration of the image viewing system according to the present embodiment. The image viewing system is constituted by a server 111 and a client 112. The server 111 and the client 112 are connected to each other via a network. The server 111 includes a compressed data storage section 121. The client 112 includes a display controller 131, a display section 132, an image decompression apparatus 133, and an input section 134. The image decompression apparatus 133 includes a compressed data selection section 141, a decompression controller 142 (request frame number acquisition section), a compressed data acquisition section 143, a compressed data holding section 144, a decompression section 145, and an image holding section 146.

The compressed data storage section 121 stores a compressed data file and a management file.

The input section 134 receives user operation. The user operation includes operation of advancing frames to be displayed in the forward or backward direction. The display controller 131 acquires the content of the user operation from the operation section 134, determines frames to be displayed according to the acquired operation content, and transmits the determined frames as a decompression request to the image decompression apparatus 133. According to the decompression request, the image decompression apparatus 133 acquires compression data files from the server 111, decompresses them to obtain an original image, and transmits the obtained image to the display controller 131. Then, the display controller 131 displays the decompressed image on the display section 132.

The image decompression apparatus 133 according to the present embodiment is configured to return a decompressed image of frames according to a decompression request from a higher-level system (display controller 131), and the decompression processing may be executed in the same or different apparatus as/from that in which the higher-level system is implemented. The image decompression apparatus 133 can be allowed to operate independently of and parallel to the higher-level system. This parallelization reduces total processing time.

In the image decompression apparatus 133, the compressed data holding section 144 and image holding section 146 are each constituted by a memory or a HDD. In the present embodiment, the image holding section 146 can store a decompressed image corresponding to 16 frames (2 compression units).

Operation of decompression processing performed in the image decompression apparatus 133 according to the present embodiment will be described.

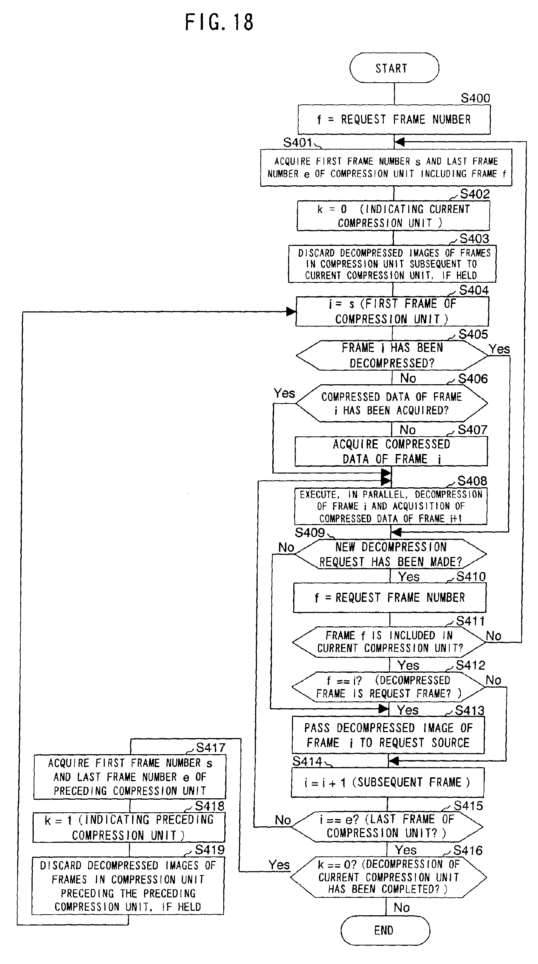

FIG. 18 is a flowchart showing an example of operation of decompression processing performed in the image decompression apparatus according to the present embodiment. The decompression processing performed in the image decompression apparatus 133 is started upon reception of a decompression request from the display controller 131. Hereinafter, the compression unit being decompressed is referred to as "current compression unit", the compression unit immediately preceding the current compression unit is referred to as "preceding compression unit", and the compression unit immediately subsequent to the current compression unit is referred to as "subsequent compression unit".

S400: The compressed data selection section 141 acquires a request frame number f from the decompression request.

S401: The compressed data selection section 141 calculates a first frame number s and last frame number e of the compression unit including the frame f. Here, the compressed data selection section 141 acquires the header of the compressed data file of the frame f with reference to a management file of the compressed data storage section 121 and calculates, from the header, the s and e. For example, when the number p of frames at the top of the header is a value other than 0, the compressed data selection section 141 determines the frame f as the first frame, sets the first frame number s as f (s=f) and sets the last frame number e as f+p (e=f+p). On the other hand, when the p is 0, the compressed data selection section 141 acquires an intracompression unit number q which is the subsequent value to the p in the header, sets the first frame number s as f-q (s=f-q), then acquires the header of a frame f-q to acquire the number p of frames at the top of the header, and sets the last frame number e as f+p-q (e=f+p-q).

S402: The decompression controller 142 sets 0, which indicates that decompression of the current compression unit including the request frame is being performed, in a variable k indicating the compression unit being processed.

S403: In the case where decompressed images of frames in a compression unit subsequent to the current compression unit are held in the image holding section 146, the decompression controller 142 deletes the held images from the image holding section 146. Further, the decompression controller 142 performs control, in combination with processing of S419, such that the image holding section 146 only stores the decompressed images of frames of only the current and preceding compression units.

S404: The decompression controller 142 sets the first frame number s of the current compression unit in a variable i indicating the number assigned to the frame to be decompressed.

S405: In the case where the frame i has been decompressed (Yes), the decompression controller 142 skips acquisition and decompression (S406 to S408) of compressed data and advances the processing to S409, while in the case where the frame i has not been decompressed (No), the decompression controller 142 advances the processing to S406.

S406: In the case where the compressed data of the frame i has been acquired (Yes), the decompression controller 142 skips acquisition (S407) of the frame i and advances the processing to S408, while in the case where the compressed data of the frame i has not been acquired (No), the decompression controller 142 advances the processing to S407.

S407: The compressed data acquisition section 143 acquires the compressed data of the frame i from the compressed data storage section 121 and stores it in the compressed data holding section 144.

S408: The decompression section 145 then reads out the compressed data of the frame i from the compressed data holding section 144 and decompresses the read out compressed data and, at the same time, the compressed data acquisition section 143 acquires the compressed data of the subsequent frame i+1. The decompression section 145 stores the decompressed image of the frame i in the image holding section 146, and the compressed data acquisition section 143 stores the compressed data of the frame i+1 in the compressed data holding section 144. Further, the decompression section 145 deletes the decompressed compressed data of the frame i from the compressed data holding section 144.

S409: The decompression controller 142 checks whether a new decompression request has been received during the above processing. In the case where a new decompression request has been received (Yes), the decompression controller 142 advances the processing to S410, while in the case where a new decompression request has not been received (No), the decompression controller 142 advances the processing to S413. In the case where the elapsed time from the reception of the decompression request is less than a predetermined threshold, the decompression controller 142 advances the processing to S413 without checking the presence/absence of a new decompression request. As the predetermined threshold, it is preferable to use average processing time T required for the acquisition and decompression of the compressed data of each frame and, thus, it is possible to pass decompressed images to a request source at substantially constant intervals irrespective of whether the request frames have been decompressed or not.

S410: The compressed data selection section 141 receives a request frame number f corresponding to the new decompression request.

S411: In the case where the frame f is included in the current compression unit, i.e., both s≤f and f≤e are satisfied (Yes), the decompression controller 142 advances the processing to S412, while in the case where the frame f is not included in the current compression unit, i.e., f<s or e<f is satisfied (No), the decompression controller 142 advances the processing to S401.

S412: In the case whether the decompressed frame i coincides with the request frame f, i.e., i == f is satisfied (Yes), the decompression controller 142 advances the processing to S413, while in the case where the decompressed frame i differs from the request frame f, i.e., i == f is not satisfied (No), the decompression controller 142 advances the processing to S414.

S413: The decompression section 145 passes the decompressed image of the frame i to a decompression request source, i.e., display controller 131.

S414: The decompression controller 142 adds 1 to the variable i indicating the number assigned to the frame to be decompressed so as to select the subsequent frame.

S415: In the case where the frame i to be decompressed next is the last frame of the current compression unit, i.e., i == e is satisfied (Yes), the decompression controller 142 determines that the decompression of the current compression unit has been completed and advances the processing to S416, while in the case where the frame i to be decompressed next is not the last frame of the current compression unit, i.e., i < e is satisfied (No), the decompression controller 142 returns the processing to S408 so as to decompress the subsequent frame.

S416; In the case where the compression unit for which the decompression has been completed is the current compression unit including the request frame f, i.e., k is 0 (Yes), the decompression controller 142 advances the processing to S417 so as to decompress the preceding compression unit. When the decompression of the current and preceding compression units are completed, i.e., k is not 0 (No), the decompression controller 142 ends the decompression processing.

S417: The decompression controller 142 acquires the first frame number s and last frame number e of the preceding compression unit as preparation for performing decompression of the preceding compression unit.

S418: The decompression controller 142 sets 1, which indicates that decompression of the preceding compression unit is being performed, in the variable k indicating the compression unit being processed.

S419: In the case where decompressed images of frames in a compression unit preceding the preceding compression unit are held in the image holding section 146, the decompression section 145 deletes the held images from the image holding section 146. Further, the decompression controller 142 performs control, in combination with processing of S403, such that the image holding section 146 only stores the decompressed images of only the current and preceding compression units.

When acquiring a decompression request indicating a request frame number of a compression unit other than the preceding and current compression units while the decompression section 145 is decompressing the compressed data of the preceding compression unit, the decompression controller 142 instructs the decompression section 145 to stop the decompression of the compressed data of the preceding compression unit and to perform decompression of the compressed data acquired by the compressed data acquisition section 143.

A concrete example of the decompression processing in the case where a decompression of one frame is requested will next be described.

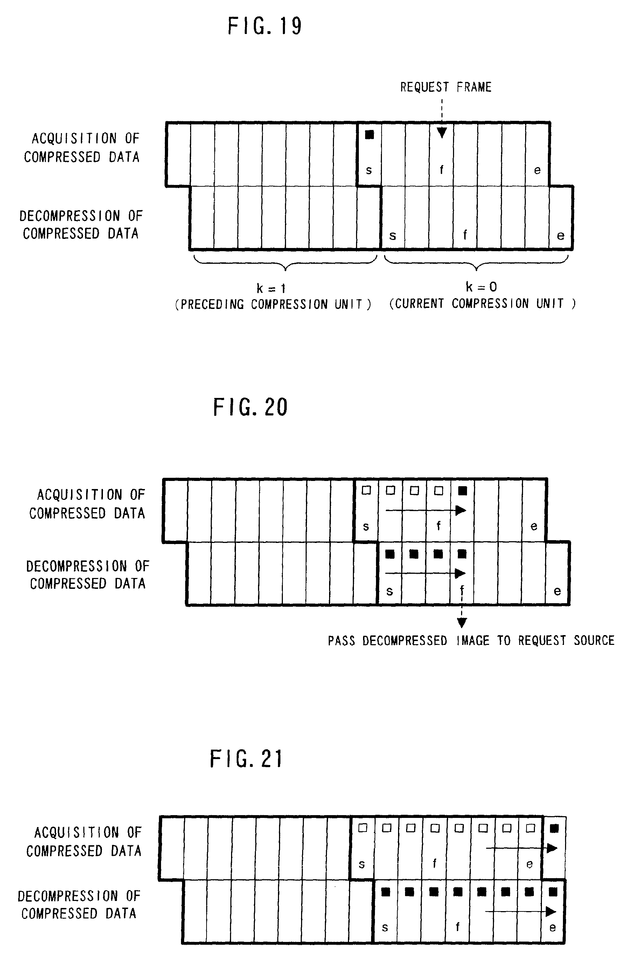

FIG. 19 is a conceptual view showing a first state in the decompression processing according to the present embodiment, which shows, in terms of the preceding and current compression units, a correspondence between frames acquired by the compressed data acquisition section 143 and frames decompressed, in parallel with the acquisition of frames, by the decompression section 145. Vertically-long rectangles represent frames, which are arranged in the order of the frame number from left to right. In this example, the size of each compression unit is set to 8 frames in consideration of balance between the velocity of compression/decompression and compression rate.

In the upper stage of the conceptual views (FIGS. 19 to 23), a black square is put to a frame of the compressed data that has been acquired by the compressed data acquisition section 143 and will be stored in the compressed data holding section 144, and a white square is put to a frame that has been deleted from the compressed data holding section 144. In the lower stage of the conceptual view, a black square is put to a frame of the decompressed image that has been decompressed by the decompression section 145 and will be stored in the image holding section 146. Further, adjacently disposed upper and lower frames in the conceptual views represent frames to be stored simultaneously. That is, simultaneously with the compressed data of a given frame that is stored in the compressed data holding section 144, the decompressed image of a frame immediately below the given frame is stored in the image holding section 146. Further, it is assumed that the compressed data holding section 144 and image holding section 146 store nothing.

FIG. 19 (first state) shows a state where the image decompression apparatus 133 has received a decompression request for the request frame f to start the decompression processing and acquisition of the compression data of the first frame s has been completed, i.e., a state where the decompression processing has reached S407. At this time, the compressed data of the first frame s of the current compression unit is stored in the compressed data holding section 144.

Hereinafter, FIGS. 20 to 24 are used to show second to fifth states in terms of the compressed data holding section 144 and the image holding section 146.

FIG. 20 is a conceptual view showing a second state in the decompression processing according to the present embodiment. FIG. 20 (second state) shows a state where, after the first state, acquisition of the compressed data of frames s+1 to f+1 has been completed, decompression of the compressed data of the first frame s to request frame f has been completed, and the decompressed image of the request frame f is passed to a request source (display controller 131), i.e., a state where the decompression processing has reached S413. In this state, the compressed data of a frame f+1 of the current compression unit is stored in the compressed data holding section 144, and decompressed images of the first frame s to request frame f of the current compression unit are stored in the image holding section 146.

FIG. 21 is a conceptual view showing a third state in the decompression processing according to the present embodiment. FIG. 21 (third state) shows a state where, after the second state, acquisition of the compressed data of the first frame of the subsequent compression unit has been completed and decompression of the compressed data of all the frames including the last frame s of the current compression unit has been completed, i.e., a state where the decompression processing has reached S416. In this state, the compressed data of the first frame of the subsequent compression unit is stored in the compressed data holding section 144, and decompressed image of all the frames of the current compression unit are stored in the image holding section 146. Here, decompression request are sequentially made in the forward direction and, when the subsequent compression unit is subjected to the decompression as a new current compression unit, the compression data of the first frame of the subsequent compression unit stored in the compressed data holding section 144 is used.

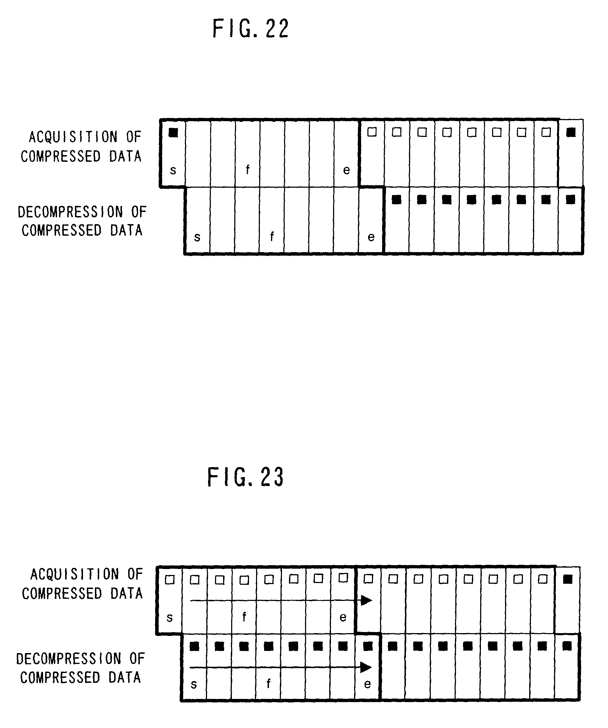

FIG. 22 is a conceptual view showing a fourth state in the decompression processing according to the present embodiment. FIG. 22 (fourth state) shows a state where, after the third state, acquisition of the compressed data of the first frame of the preceding compression unit has been completed, i.e., a state where the decompression processing has returned to S404 passing through S417 to S419 and reached S407. In this state, the compressed data of the first frame of the preceding compression unit is stored in the compressed data holding section 144, and decompressed image of all the frames of the current compression unit are stored in the image holding section 146.

FIG. 23 is a conceptual view showing a fifth state in the decompression processing according to the present embodiment. FIG. 23 (fifth state) shows a state where, after the fourth state, decompression of the compressed data of all the frames of the preceding compression unit has been completed, i.e., a state where the decompression processing has been completed. In this state, decompressed images of all the frames of the preceding and current compression units are stored in the storage section (image holding section 146).

Next, a concrete example of the decompression processing in the case where decompression request are sequentially made in the backward direction of the frame number will be described.

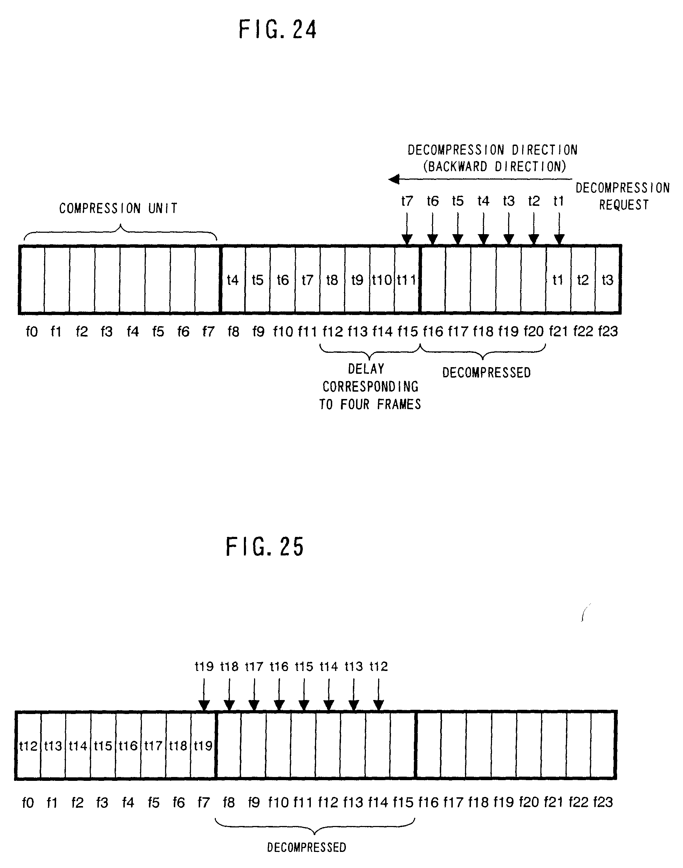

FIG. 24 is a conceptual view showing a sixth state in the decompression processing according to the present embodiment, which shows a correspondence between decompression request and frames to be decompressed by the decompression section 145. Vertically long rectangles represent frames to which frame numbers f0 to f23 are put. Processing time T is required to complete decompression of one frame, and decompression requests are received at a time intervals T according to the control performed in S409. Time t1 to time t19 the time interval between each of which is set to T represent the time at which a decompression request is received. A frame to which an arrow is put to together with the time represents a target frame of the decompression request. A frame added with a time in the rectangular frame thereof represents a frame being decompressed. It is assumed here that the compressed data holding section 144 and the image holding section 146 store nothing.

In this sixth state, operation from time t1 to time t11 is shown. First, at time t1, a first decompression request for a frame f21 is made. Then, at time t2, t3, ···, t6, decompression requests (for frames f20, f19, ···, f16) are sequentially made in the backward direction of the frame number. Then, at time t7, the request frame is shifted from the first frame f16 of the current compression unit to last frame f17 of the preceding compression unit.

After a decompressed image f21 is output from the image decompression apparatus 133, decompressed images f20, f19, ···, f16 corresponding to the decompression requests are output at time t2, t3, ···, t6. At time t2 and t3, decompression of frames f22 and f23 is performed in the forward direction, and, at time t4, the decompression target is shifted to the first frame f8 of the preceding compression unit. As a result, at the time point when the decompression request is issued at time t7, a delay corresponding to four frames occurs. Then, at time t8 to t11, frames f12 to f15 are decompressed and, at time t11, decompression of a frame f15 corresponding to the decompression request of t7 is completed.

FIG. 25 is a conceptual view showing a seventh state in the decompression processing according to the present embodiment. Respective symbols indicate the same meaning as those in FIG. 24 (sixth state).

In this seventh state, operation from time t12 to time t19 is shown. After time t11, when decompression requests (for frames f14, f13, ···, f7) are sequentially made in the backward direction of the frame number at time t12, t13, ···, t19, the decompression of the request frame f7 has been completed at the time point when the decompression request is issued at time t19, with the result that the decompression image f7 can be output without a delay. The decompression of all frames (from the first to last frames) of the preceding compression unit is completed at the time point when the decompression target is shifted to the last frame of the preceding compression unit, so that, decompression images corresponding to the following decompression requests (for frames f6, f5, ···,) to be sequentially made in the backward direction can also be output without a delay. Note that in the case where decompression requests are sequentially made in the forward direction of the frame number, the decompression can continuously be performed without a delay.

According to the present embodiment, after the compressed data of a given compression unit including the frame for which a decompression request has been made are decompressed, the compressed data of a compression unit immediately preceding the given compression unit are decompressed, whereby decompressed images of the both compression units are always cached, so that even when the decompression is performed in the backward direction of the frame number, it is possible to output decompressed images in a continuous manner at substantially constant time intervals as in the case where the decompression is performed in the forward direction of the frame number. Thus, user's viewability and operability in a system that decompresses a compressed 3D image (a plurality of 2D images) so as to display the decompressed 3D image can be enhanced.

The image decompression apparatus according to the present embodiment can suitably be applied to an imaging diagnostic apparatus to improve the performance thereof. Examples of the imaging diagnostic apparatus include a CT and an MR.

Further, it is possible to provide a program that allows a computer constituting the image decompression apparatus to execute the above steps as an image decompression program. By storing the above program in a computer-readable storage medium, it is possible to allow the computer constituting the image decompression apparatus to execute the program. The computer-readable medium mentioned here includes: an internal storage device mounted in a computer, such as ROM or RAM, a portable storage medium such as a CD-ROM, a flexible disk, a DVD disk, a magneto-optical disk, or an IC card; a database that holds computer program; another computer and database thereof; and a transmission medium on a network line.

The present invention can be embodied in various forms. Therefore, the aforementioned embodiments are merely illustrative of the invention in every aspect, and not limitative of the same. The scope of the present invention is defined by the appended claims, and is not restricted by the description herein set forth. Further, various changes and modifications to be made within the scope of the appended claims and equivalents thereof are to fall within the scope of the present invention.

In any of the above aspects, the various features may be implemented in hardware, or as software modules running on one ore more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An image decompression apparatus that performs, based on compressed data obtained by compressing an image of a frame having a frame number, decompression of the image, comprising:
a request frame number acquisition section that sequentially acquires request frame numbers which are the numbers assigned to frames for which decompression is required in the forward or backward direction of the frame number;
a compressed data acquisition section that acquires compressed data of a first compression unit to which the request frame number belongs and compressed data of a second compression unit adjacent to the first compression unit in the backward direction of the frame number, the compressed data being constituted by a plurality of consecutive compression units each including a plurality of consecutive frames wherein the compressed data of the first frame in each compression unit is obtained by being subjected to compression based on only an image of the first frame and compression data of frames other than the first frame in each compression unit are obtained by being subjected to compression based on images of immediately preceding frames;
a decompression section that decompresses the compressed data of the first and second compression units acquired by the compressed data acquisition section to obtain decompressed images; and
an image holding section that holds the decompressed images of the first and second compression units generated by the decompression section and extracts decompressed image corresponding to the request frame numbers so as to output the decompressed images.

2. The image decompression apparatus according to claim 1, wherein
the decompression section performs decompression of the compressed data acquired by the compressed data acquisition section in parallel with the acquisition of the compressed data performed by the compressed data acquisition section.

3. The image decompression apparatus according to claim 1 or 2, wherein
in the case where the request frame number acquired by the request frame number acquisition section shifts to outside the first compression unit to update the first and second compression units, the image holding section deletes decompressed images other than those of the first and second compression units.

4. The image decompression apparatus according to any of the preceding claims, wherein
in the case where the request frame number acquired by the request frame number acquisition section exists within the second compression unit, the compressed data acquisition section sets the second compression unit as a new first compression unit and sets a compression unit adjacent to the new first compression unit in the backward direction of the frame number as a new second compression unit.

5. The image decompression apparatus according to any of the preceding claims, wherein
in the case where the request frame number acquired by the request frame number acquisition section exists within a third compression unit which is adjacent to the first compression unit in the forward direction of the frame number, the compressed data acquisition section sets the first compression unit as a new second compression unit and sets the third compression unit as a new first compression unit.

6. The image decompression apparatus according to any of the preceding claims, wherein
the compressed data acquisition section acquires compressed data of the frame number subsequent to frame number being decompressed by the decompression section.

7. The image decompression apparatus according to any of the preceding claims, wherein
in the case where a decompressed image corresponding to the request frame number acquired by the request frame number acquisition section is held in the image holding section, the decompression section does not perform decompression of the compressed data corresponding to the relevant request frame number.

8. The image decompression apparatus according to any of the preceding claims, wherein
the image holding section outputs a decompressed image corresponding to the request frame number after a predetermined time has elapsed since the immediately preceding decompressed image was output.

9. The image decompression apparatus according to any of the preceding claims, wherein
at the time point when a decompressed image corresponding to the request frame number is generated by the decompression section, the image holding section outputs the decompressed image.

10. The image decompression apparatus according to any of the preceding claims, wherein
in the case where the request frame number acquisition section acquires a request frame number in a compression unit other than the first and second compression units while the decompression section is decompressing the compressed data of the second compression unit, the decompression section stops the decompression of the compressed data of the second compression unit and performs decompression of the compressed data acquired by the compressed data acquisition section.

11. The image decompression apparatus according to any of the preceding claims, wherein
the compressed data acquisition section acquires the compressed data of the second compression unit after acquiring the compressed data of the first compression unit.

12. The image decompression apparatus according to any of the preceding claims, wherein
the decompression section decompresses the compressed data of the second compression unit after decompressing the compressed data of the first compression unit.

13. The image decompression apparatus according to any of the preceding claims, wherein
the decompression section decompresses the compressed data in each compression unit which are acquired by the compressed data acquisition section in the order according to the frame number.

14. An image decompression program allowing a computer to execute, based on compressed data obtained by compressing an image of a frame having a frame number, decompression of the image, the program allowing the computer to execute the steps of:
sequentially acquiring request frame numbers which are the numbers assigned to frames for which decompression is required in the forward or backward direction of the frame number;
acquiring compressed data of a first compression unit to which the request frame number belongs and compressed data of a second compression unit adjacent to the first compression unit in the backward direction of the frame number, the compressed data being constituted by a plurality of consecutive compression units each including a plurality of consecutive frames wherein the compressed data of the first frame in each compression unit is obtained by being subjected to compression based on only an image of the first frame and compression data of frames other than the first frame in each compression unit are obtained by being subjected to compression based on images of immediately preceding frames;
decompressing the compressed data of the acquired first and second compression units to obtain decompressed images; and
holding the decompressed images of the first and second compression units and extracting decompressed image corresponding to the request frame numbers so as to output the decompressed images.

15. An image decompression method that performs, based on compressed data obtained by compressing an image of a frame having a frame number, decompression of the image, comprising the steps of:
sequentially acquiring request frame numbers which are the numbers assigned to frames for which decompression is required in the forward or backward direction of the frame number;
acquiring compressed data of a first compression unit to which the request frame number belongs and compressed data of a second compression unit adjacent to the first compression unit in the backward direction of the frame number, the compressed data being constituted by a plurality of consecutive compression units each including a plurality of consecutive frames wherein the compressed data of the first frame in each compression unit is obtained by being subjected to compression based on only an image of the first frame and compression data of frames other than the first frame in each compression unit are obtained by being subjected to compression based on images of immediately preceding frames;
decompressing the compressed data of the acquired first and second compression units to obtain decompressed images; and
holding the decompressed images of the first and second compression units and extracting decompressed image corresponding to the request frame numbers so as to output the decompressed images.
